# EUROPEAN PATENT APPLICATION

(11) **EP 0 673 163 A1**
(43) Date of publication of application: **20.09.1995**
(21) Application number: 94301960.4
(22) Date of filing: 18.03.1994
(51) Int. Cl.: H04N 7/169

(54) **Method and apparatus for encoding and decoding of signals**

(71) Applicant: SOUTH AFRICAN MICRO-ELECTRONIC SYSTEMS (PROPRIETARY) LIMITED, Pretoria, Transvaal Province (ZA)
(72) Inventor: Rademeyer, Pieter, Pretoria, Transvaal Province (ZA)
(74) Representative: Williams, Janice

(57) **Abstract**

A system for encoding and decoding a transmission signal comprises: (a) an encoder with a first delay line to introduce variable delays into the signal according to an encryption algorithm; (b) a transmitter; (c) a receiver; and, (d) a decoder with a second delay line to further delay the received signal according to a decryption algorithm, to cause the decoded signal to be delayed by a fixed time interval relative to the unencoded transmission signal.

## Description

THIS INVENTION relates to an apparatus and a method for the encoding and decoding of transmitted signals and, more particularly but not exclusively, to an apparatus and a method for the encoding and decoding of television broadcasts.

In the discussion which follows, the invention will be described with reference to the encoding and decoding of television signals, but it is to be clearly understood that the scope of the invention is not limited to this application.

The encoding and decoding of transmission signals is widely practised. The main reasons for this are for security, in order to prevent unauthorised eavesdroppers from obtaining the contents of the unencoded (or "in clear") transmission, or for control purposes, in order to enforce the payment of television of radio licence fees by subscribers to the transmission.

One type of encoding of television signals is known as "time domain jittering" in which individual horizontal video lines of the television signals are differentially delayed in the time domain to provide a degraded, jittery picture at a television receiver. The encoded signal may be decoded at the receiver by removing the differential time delays between the individual video lines to enable the transmitted signal to be displayed "in clear" by the receiver.

As far as the applicant is aware, all known systems for the encoding of broadcast signals operate in an environment in which the broadcast signals are mixed down to baseband frequencies prior to being encoded. This requires the use of complex oscillators, up-mixers and down-mixers which results in encoders and decoders which are unnecessarily complex and expensive.

It is an object of this invention to provide an apparatus and a method for encoding and decoding transmitted signals which will, at least partially, alleviate the abovementioned difficulties.

In accordance with this invention, there is provided a system for encoding and decoding a transmission signal, comprising:
an encoder for encoding the signal before transmission, the encoder having a first delay line arranged to variably delay the signal in accordance with an encryption pseudo-random formula;
a transmitter for transmitting the pseudo-randomly delayed signal;
a receiver for receiving the transmitted, pseudo-randomly delayed signal; and
a decoder for decoding the received signal, the decoder having a second delay line arranged to variably delay the received signal in accordance with a decryption pseudo-random formula, to cause the decoded signal to be delayed by a fixed time interval relative to the unencoded transmission signal.

Further features of the invention provide for the system to include a synchronising means for synchronising the encryption and decryption pseudo-random formulas, for the synchronising means to be at least one timing pulse in the encoded signal, for the transmission signal to be a television broadcast signal, and for the timing pulses to be the frame and horizontal synchronisation pulses of the television broadcast signal.

Yet further features of the invention provide for the first and second delay lines to be acoustic wave delay lines, preferably surface acoustic wave delay lines, for each surface acoustic wave delay line to have an input and a plurality of outputs, to cause a signal applied to the input of the delay line to appear at each output after a different delay interval, for each output of the delay line to be individually selectable by a switching means, and for the switching means to be any one of a field-effect transistor, a PIN diode or any other known electrical switching device.

Alternatively each surface acoustic wave delay line may have a plurality of inputs and an output, to cause a signal applied at any input to appear at the output after a different delay interval, each input of the delay line is individually selectable by a switching means, and the switching means is any one of a field-effect transistor, a PIN diode or any other known electrical switching device.

Still further features of the invention provide for the system to include at least two control processors for executing respectively, the encryption and decryption pseudo-random formulas, for each pseudo-random formula to cause its associated processor to select only one of the outputs of its corresponding surface acoustic wave delay line at a time.

Preferably, the decoder includes an interface port adapted to receive a memory, the decryption pseudo-random formula is stored in the memory, the memory is a smart card, and the smart card is selectively programmable to alter the stored decryption pseudo-random formula.

There is also provided for the system to include converting means for converting the frequency of the transmitted signal to the centre frequency of the surface acoustic wave delay line, and for one surface acoustic wave delay line, one control processor and the field-effect transistors corresponding to each output of the surface acoustic wave delay line to be fabricated as a hybrid integrated circuit.

The invention extends to an encoder adapted for use in the system described above for encoding the transmission signal, and to a decoder adapted for use in the system described above for decoding the transmission signal.

The invention extends to provide a method for encoding and decoding a transmission signal, comprising:
encoding the signal prior to transmission by means of an encoder having a first delay line arranged to variably delay the signal in accordance with an encryption pseudo-random formula;
transmitting the pseudo-randomly delayed signal by means of a transmitter;
receiving the transmitted, pseudo-randomly delayed signal at a receiver; and
decoding the received signal by means of a decoder having a second delay line arranged to variably delay the received signal in accordance with a decryption pseudo-random formula, to cause the decoded signal to be delayed by a fixed time interval relative to the unencoded transmission signal.

There is also provided for synchronising the encryption and decryption pseudo-random formulas by means of timing pulses in the encoded signal, and for converting the frequency of the transmitted signal to the centre frequency of the delay line.

There is also provided for executing the encryption and decryption pseudo-random formulas in different control processors, for storing the decryption pseudo-random formula in a memory insertable into an interface port on the decoder, and for the memory to be selectively programmable at selectable times to alter the stored decryption pseudo-random formula.

A preferred embodiment of the invention is described below, by way of example only, and with reference to the accompanying drawings, in which:
- Figure 1: is a functional block diagram of a system for encoding and decoding a transmission signal;
- Figure 2: is a functional block diagram of an encoder of the system of Figure 1;
- Figure 3: is a functional block diagram of a decoder of the system of Figure 1; and
- Figure 4: is a schematic diagram illustrating the operation of a surface acoustic wave delay line of the system of Figure 1.

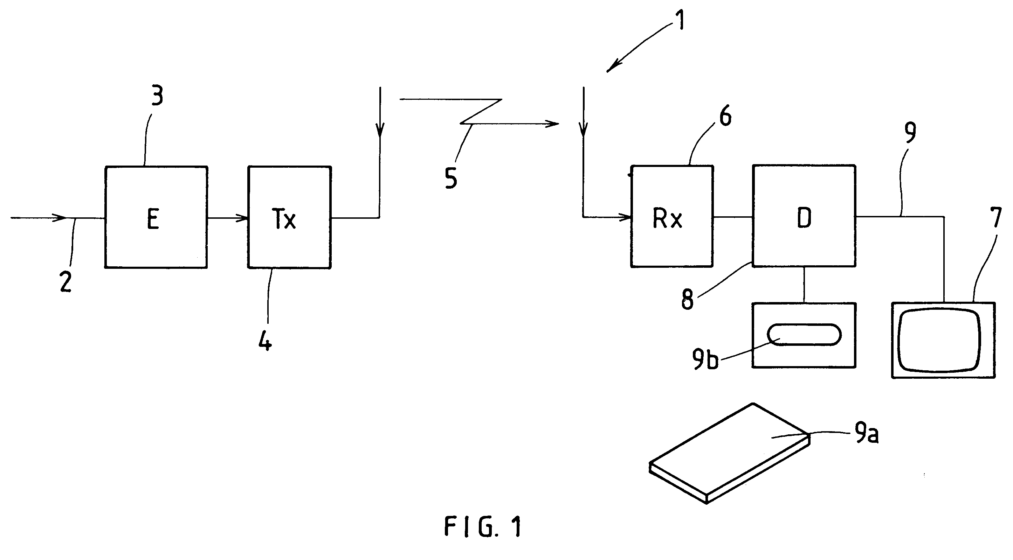

Referring to Figure 1, a system for encoding and decoding a transmission signal is indicated generally by reference numeral (1). A television broadcast (2) is encoded by an encoder (3) to have the individual horizontal video lines of the signal randomly delayed by different intervals in the time domain. The encoded signal output by the encoder (3) is broadcast by one or more transmitters (4) over a communication channel (5).

The transmitted signal is received by a receiver (6) and, if displayed on a television monitor (7) without cancellation of the differential time delays between the individual video lines, produces a degraded or "jittery" picture image. The received signal is decoded by a decoder (8) which cancels the differential time delays between the video lines, to produce a reconstructed signal (9) in which the video lines are uniformly delayed relative to the original television broadcast signal (2).

The decoder (8) is activated by means of a smart card (9a) which is insertable into an input port (9b) on the decoder. The smart card (9a) contains configuration data to enable the decoder, and the data may be altered from time to time to enable the encoder (3) and the decoder (8) to be used for implementing a pay-television subscription service.

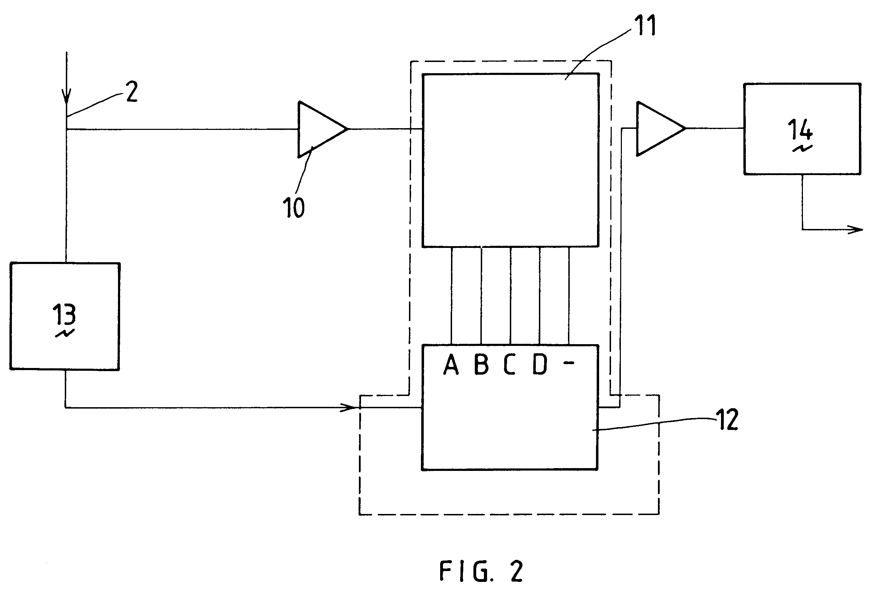

Turning now to Figure 2, in which features similar to those of Figure 1 are indicated by like numerals, the encoder (3) is shown in greater detail. The television broad-cast signal (2) is amplified by means of an amplifier (10) and fed into the input of a tapped delay line (11). The tapped delay line (11) is a surface acoustic wave (SAW) device in which acoustic waves are propagated along the surface of a piezoelectric substrate (not shown) which has a low acoustic loss.

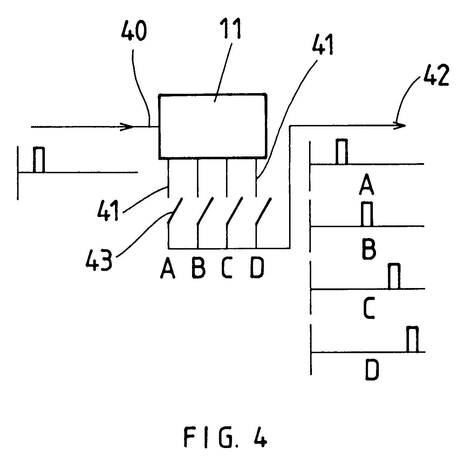

The operation of the SAW tapped delay line (11) may be more clearly understood with reference to Figure 4. The delay line (11) has an input (40) and a number of outputs (taps) (41) located on the substrate at different physical distances from the input. An electrical signal applied to the input (40) will cause an acoustic wave to propagate along the substrate (not shown) of the delay line (11). As the acoustic wave reaches a tap (41), the input signal will be reproduced in electrical format at the tap, but will be delayed by the time taken for the acoustic wave to travel from the input to the particular output tap. By locating the taps (41) at predetermined distances along the length of the SAW device, the input signal may be delayed by different time intervals which are a function of the distances between the input and the various taps. Each tap (41) is switchably connected to an output (42) by means of a field effect transistor (FET) (43).

In an alternative embodiment the SAW tapped delay line (11) may comprise several different acoustic substrates, each having one input and one or more outputs. In this embodiment, the differential time delays are obtained on the different substrates by splitting an electrical input signal, applying it to each substrate, and switchably connecting the taps of the different substrates to an output in the manner described above.

The SAW tapped delay line may also be used in an inverse manner, in which the delay line has a single output and a number of inputs located on the substrate at different physical distances from the output. An electrical signal applied to any one of the inputs will cause an acoustic wave to propagate along the substrate of the delay line. As the acoustic wave reaches the output, the input signal will be reproduced in electrical format, but will be delayed by the time taken for the acoustic wave to travel from the particular input to the output. By locating the inputs on the substrate at predetermined distances from the output, an input signal may be delayed by different time intervals which are a function of the distances between the various inputs and the output. An input signal is selectively applied to any particular input by means of a different FET associated with each input.

Returning to Figure 2, an encryption algorithm executes in a control processor (12) and regulates the order in which the tap selector FETs (43) of the SAW delay line (11) are activated. The encryption algorithm is a pseudo-random sequence generator which is arranged to cause only one of the tap selection FETs (43) to close at any time.

The frame and horizontal synchronisation pulses of the television broadcast signal (2) are extracted by means of a radio frequency coupler (13) and act as a synchronous time reference signal for the control processor (12). The encryption algorithm (12) delays the individual horizontal lines of the television broadcast signal (2) and the corresponding video colour burst, relative to the synchronisation pulses. The consecutive time delays for each horizontal line are determined by the output of the pseudo-random sequence generator and the tap selection FETs (43) of the SAW delay line (11). The maximum time delay of any horizontal line is limited in order to prevent overlap between the delayed line and the horizontal synchronisation pulse of the subsequent line.

The SAW device (11) operates at radio frequencies, and functions as a delay line only over a limited pass band of frequencies, typically centered between 30MHz to about 500 MHz. In contrast, other known systems for encoding and decoding transmission signals operate at baseband frequencies. The output of the SAW delay line (11) is mixed up or down to any desired UHF or VHF transmission frequency by means of a local oscillator and mixer (14), and is subsequently transmitted by the transmitter (4) of Figure 1.

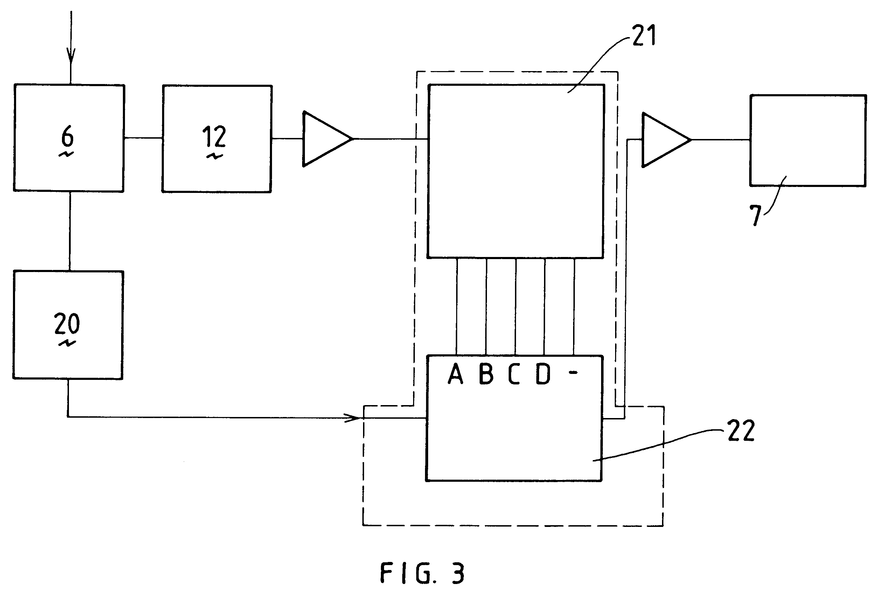

Turning now to Figure 3, in which features similar to those of Figures 1 and 2 are indicated by like numerals, the decoder (8) is shown in greater detail. The encoded radio-frequency signal which is received by the receiver (6) is fed into a radio-frequency coupler (20) which extracts synchronisation information in the form of the frame and horizontal line synchronisation pulses of the television broadcast signal (2). The synchronisation pulses act as a time reference signal for the decoder (8).

The received signal is also fed into the input of a further SAW tapped delay line (21) which is matched to the SAW delay line (11) of the encoder (3). Prior to being applied to the delay line (21), the received signal is mixed up or down from the transmission frequency, to the centre frequency of the SAW delay line by means of a mixer and local oscillator pair (22).

Each individual tap (41) of the tapped delay line (21) is activated by means of a selection FET (43) as described above. The tap selection FETs (43) are selected according to an order determined by a decryption algorithm executing in a second control processor (22). The decryption algorithm is a pseudo-random sequence generator identical to that to the encoding algorithm of the encoder (3) and is arranged to cause only one of the selection FETs (43) to close at any time in accordance with the frame and horizontal line synchronisation pulses extracted by the radio frequency coupler (20).

The decryption algorithm causes the SAW delay line (21) to delay further the individual horizontal lines of the television broadcast signal, relative to the synchronisation pulses. Each horizontal line is delayed in the SAW delay line (21) by a time interval complementary to the delay introduced to that line by the encoder (3). The line which incurred the least delay in the encoder (3) will incur the greatest time delay in the decoder (8) and vice versa, so that each horizontal line is delayed, after decoding, by a constant interval relative to its corresponding horizontal synchronisation pulse. The uniformly delayed horizontal lines of the decoded signal will remove the "jitter" introduced by the encoder (3), and will enable a clear image to be displayed on the television monitor (7).

The output of the SAW delay line (22) is mixed up or down from the centre frequency of the delay line, to any desired UHF or VHF frequency for demodulation and display on a television monitor (7) in the conventional manner.

The decryption algorithm is stored in a memory (not shown) on the smart card (9a). The decryption algorithm may be executed by the control processor (22) only when the smart card (9a) is inserted into the input port (9b). The encryption and decryption algorithms may be altered at regular intervals, say yearly. When the encryption algorithm is changed, a subscriber to the broadcast signal (2) will require an updated decryption algorithm in the smart card (9a) in order to be able to decode the encoded transmission signal. In this manner, the collection of licence fees from subscribers to the broadcast signal may be enforced, and pirate viewing may be simply and easily eliminated.

The contents of the smart card (9a) may be unalterable, in which case a new matching smart card will be necessary each time the encryption algorithm is changed. Alternatively, the smart card (9a) could be reprogrammed with an updated decryption algorithm each time the encryption algorithm is modified. In either of these modes of operation, a smart card (9a) is not keyed to a particular decoder (8) and any smart card will enable any decoder.

A single surface acoustic wave delay line (11) or 21), a single control processor (12 or 22) and corresponding tap selection FETs (43) may be fabricated as a single hybrid device by using hybrid packaging technologies, thereby enabling the mass production of low cost decoders (8).

Numerous modifications are possible to the above embodiment without departing from the scope of the invention. For example, in transmission signals which do not contain intrinsic timing information as above, synchronisation pulses could be added to the signal prior to encoding by means of appropriate electronic circuitry, the synchronisation pulses being used by the control processor (22) for clocking the decryption algorithm and removed from the signal during or after decryption.

Further, the system could be expanded to have a multi-channel encoding / decoding facility in which multiple broadcast signals are simultaneously encoded and subsequently decoded. In addition, the removable memory (9a) and the input port (9b) could be eliminated and control of individual decoders (8) effected by separate transmission signals received "over the air" from the transmitter (4) via the communication channel (5). Still further, the system could include encoding and decoding of the audio channel of the television broadcast signal (2).

In addition, the tap selection switch FETs could be replaced by PIN diodes or by any other known type of electrical switching devices.

The invention therefore provides a simple and inexpensive means for encoding and decoding transmitted signals at radio frequencies.

## Claims

1. A system for encoding and decoding a transmission signal comprising:
an encoder for encoding the signal before transmission, the encoder having a first delay line arranged to variably delay the signal in accordance with an encryption pseudo-random formula;
a transmitter for transmitting the pseudo-randomly delayed signal;
a receiver for receiving the transmitted, pseudo-randomly delayed signal; and
a decoder for decoding the received signal, the decoder having a second delay line arranged to variably delay the received signal in accordance with a decryption pseudo-random formula, to cause the decoded signal to be delayed by a fixed time interval relative to the unencoded transmission signal.

2. A system as claimed in claim 1 which includes a synchronising means for synchronising the encryption and decryption pseudo-random formulas.

3. A system as claimed in claim 2 in which the synchronising means is at least one timing pulse in the encoded signal.

4. A system as claimed in any one of the preceding claims in which the transmission signal is a television broadcast signal.

5. A system as claimed in claim 4 as dependent on claim 3 in which the timing pulses are the frame and horizontal synchronisation pulses of the television broadcast signal.

6. A system as claimed in any one of the preceding claims in which the first and second delay lines are acoustic wave delay lines.

7. A system as claimed in claim 6 in which the acoustic wave delay lines are surface acoustic wave delay lines.

8. A system as claimed in claim 7 in which at least one surface acoustic wave delay line has an input and a plurality of outputs, to cause a signal applied to the input of the delay line to appear at each output after a different delay interval.

9. A system as claimed in claim 8 in which each output of the delay line is individually selectable by a switching means.

10. A system as claimed in claim 7 in which at least one surface acoustic wave delay line has an output and a plurality of inputs, to cause a signal applied at any input to appear at the output after a different delay interval.

11. A system as claimed in claim 10 in which each input of the delay line is individually selectable by a switching means.

12. A system as claimed in claim any one of claims 9 or 11 in which the switching means is any one of a field effect transistor, a PIN diode or any other known electrical switching device.

13. A system as claimed in any one of the preceding claims which includes at least two control processors for executing, respectively, the encryption and decryption pseudo-random formulas.

14. A system as claimed in claim 13 in which each pseudo-random formula causes its associated processor to select only one of the outputs of its corresponding surface acoustic wave delay line at a time.

15. A system as claimed in any one of the preceding claims which includes an interface port adapted to receive a memory.

16. A system as claimed in claim 15 in which the decryption pseudo-random formula is stored in the memory.

17. A system as claimed in any one of claims 15 or 16 in which the memory is a smart card.

18. A system as claimed in claim 17 in which the smart card is selectively programmable to alter the stored decryption pseudo-random formula.

19. A system as claimed in any one of the preceding claims which includes a converting means for converting the frequency of the transmitted signal to the centre frequency of the surface acoustic wave delay line.

20. A system as claimed in any one of claims 13 to 19 in which one surface acoustic wave delay line, one control processor and the field effect transistors corresponding to each output of the surface acoustic wave delay line are fabricated as a hybrid integrated circuit.

21. A system as claimed in any one of claims 6 to 12 in which the acoustic wave delay lines include at least one acoustic substrate.

22. A system as claimed in claim 21 in which the acoustic wave delay lines include a plurality of acoustic substrates.

23. An encoder adapted for use in any one of claims 1 to 22.

24. A decoder adapted for use in any one of claims 1 to 20.

25. A method for encoding and decoding a transmission signal, comprising the steps of:
encoding the signal prior to transmission by means of an encoder having a first delay line arranged to variably delay the signal in accordance with en encryption pseudo-random formula;
transmitting the pseudo-randomly delayed signal by means of a transmitter;
receiving the transmitted, pseudo-randomly delayed signal at a receiver; and
decoding the received signal by means of a decoder having a second delay line arranged to variably delay the received signal in accordance with a decryption pseudo-random formula, to cause the decoded signal to be delayed by a fixed time interval relative to the unencoded transmission signal.

26. A method as claimed in claim 25 which includes the further step of synchronising the encryption and decryption pseudo-random formulas by means of timing pulses in the encoded signal.

27. A method as claimed in any one of claims 25 or 26 which includes the step of converting the frequency of the transmitted signal to the centre frequency of the delay line.

28. A method as claimed in any one of claims 25 to 27 in which the encryption and decryption pseudo-random formulas are executed in different control processors.

29. A method as claimed in any one of claims 25 to 28 in which the decryption pseudo-random formula is stored in a memory insertable in an interface port on the decoder.

30. A method as claimed in claim 29 in which the decryption pseudo-random formula stored in the memory is programmably altered at selectable times.
